(19) Europäisches Patentamt
European Patent Office
Office européen des brevets

(11) EP 3 245 240 B1

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **16700456.3**

(22) Anmeldetag: **13.01.2016**

(51) Internationale Patentklassifikation (IPC):
***C08G 18/48*** *(2006.01)* ***C08G 18/72*** *(2006.01)*
***C08G 18/24*** *(2006.01)*

(52) Gemeinsame Patentklassifikation (CPC):
(C-Sets verfügbar)
**C08G 18/4829; C08G 18/248; C08G 18/722; G02B 1/04; G02B 1/041** (Forts.)

(86) Internationale Anmeldenummer:
**PCT/EP2016/050551**

(87) Internationale Veröffentlichungsnummer:
**WO 2016/113295 (21.07.2016 Gazette 2016/29)**

(54) **ZUSAMMENSETZUNG FÜR TRANSPARENTE FORMKÖRPER AUF POLYURETHANBASIS**

COMPOSITION FOR TRANSPARENT MOULDED OBJECTS BASED ON POLYURETHANE

COMPOSITION POUR DES CORPS MOULÉS TRANSPARENTS À BASE DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.01.2015 EP 15151192**

(43) Veröffentlichungstag der Anmeldung:
**22.11.2017 Patentblatt 2017/47**

(73) Patentinhaber: **Covestro Deutschland AG**
**51373 Leverkusen (DE)**

(72) Erfinder:
- **MALEIKA, Robert**
**40589 Düsseldorf (DE)**
- **STERN, Frank-Stefan**
**51427 Bergisch Gladbach (DE)**
- **RICHTER, Frank**
**51373 Leverkusen (DE)**
- **GRESZTA-FRANZ, Dorota**
**42659 Solingen (DE)**
- **LAAS, Hans-Josef**
**51519 Odenthal (DE)**

(74) Vertreter: **Levpat**
**c/o Covestro AG**
**Gebäude 4825**
**51365 Leverkusen (DE)**

(56) Entgegenhaltungen:
**WO-A1-2011/051247 WO-A2-2008/092597**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**G02B 1/041, C08L 75/04**

## Beschreibung

Die Erfindung betrifft eine Zusammensetzung enthaltend eine Isocyanatkomponente, eine Polyolkomponente, eine Additivkomponente und eine Katalysatorkomponente. Weitere Gegenstände der Erfindung sind ein Verfahren zur Herstellung eines Elastomers, sowie das Elastomer und die Verwendung der Zusammensetzung zur Herstellung transparenter Formkörper. Die transparenten Formkörper sind ein weiterer Gegenstand der Erfindung.

Transparente Kunststoffe ersetzen heute in vielen Bereichen Glas bei der Herstellung optischer Bauteile. Auch bei optischen Linsen wie Brillengläsern können polymere Werkstoffe ihre Vorteile hinsichtlich geringen Gewichts, höherer Bruchfestigkeit und leichterer Verarbeitbarkeit ausspielen, weshalb sie das traditionell verwendete Mineralglas mehr und mehr substituieren.

Die industrielle Herstellung organischer Brillengläser aus duromeren Kunststoffen kann beispielsweise nach einem speziellen Gießverfahren erfolgen, bei dem flüssige Reaktionsgemische mit Additiven, wie z.B. UV-Absorbern, versetzt, bei Temperaturen möglichst weit unterhalb ihrer Aushärtetemperatur in gläserne Gießformen eingefüllt und anschließend in einem exakt temperierten Prozess über viele Stunden ausgehärtet werden.

Eine zunehmend wichtigere Rolle als Material für die Kunststoff Linsen spielen Elastomere auf Polyurethanbasis. Hierbei bestehen besondere Anforderungen hinsichtlich der optischen Qualität der ausgehärteten Kunststoffe. Zur beschleunigten Aushärtung ist dem Fachmann der Einsatz von Katalysatoren bereits bekannt.

Ein Nachteil ist jedoch, dass die bereits bei Zimmertemperatur langsam ablaufende NCO-OH-Reaktion durch die Anwesenheit des Katalysators weiter beschleunigt wird, so dass für die Verarbeitung der fertig formulierten Mischung eines derartigen Systems nur ein zeitlich enges bzw. engeres Verarbeitungsfenster zur Verfügung steht (Topfzeit).

Um diese Problematik möglichst umgehen zu können, wurden so genannte thermolatente Katalysatoren entwickelt. Diese Verbindungen zeichnen sich dadurch aus, dass sie bei niedrigen Temperaturen nur eine geringe bis keine Aktivität aufweisen und erst bei erhöhten Temperaturen ihre katalytische Aktivität entfalten. Aufgrund dieser Eigenschaften können fertig formulierte Mischungen zur Herstellung von Elastomeren, enthaltend thermolatente Katalysatoren, bei niedrigen Temperaturen eine nur minimal verringerte Topfzeit im Vergleich zu den entsprechenden unkatalysierten Systemen aufweisen. Solche Katalysatoren sind beispielsweise zur Anwendung in Polyurethanbeschichtungen in der WO 2011/051247 A1 offenbart.

Die WO 2008/092597 A2 offenbart eine Zusammensetzung zur Herstellung optischer Linsen auf Polyurethanbasis unter Verwendung von Metallsalzen wie z.B. Dibutylzinn(IV)-dilaurat (DBTL), Zinknaphthenat, Bismuth(III)-nitrat oder Phenylquecksilberneodecanoat als Katalysatoren. Von diesen Katalysatoren ist das Phenylquecksilbemeodecanoat als thermolatenter Katalysator bereits bekannt, bei Zinknaphthenat handelt es sich jedoch nicht um einen thermolatenten Katalysator.

Jedoch führt auch Phenylquecksilberneodecanoat zu einer verringerten Topfzeit der Zusammensetzung im Vergleich zu einem unkatalysierten System. Weiterhin weisen herkömmliche Elastomere auf Polyurethanbasis eine große Haftung gegenüber der Gießform auf, so dass sich diese sehr schlecht entformen lassen.

Daher war es die Aufgabe der vorliegenden Erfindung eine Zusammensetzung bereitzustellen, die eine verlängerte Topfzeit gegenüber einem unkatalysierten System aufweist und aus welcher sich transparente Formkörper, bevorzugt optische Linsen, herstellen lassen, die durch sehr gute Entformungseigenschaften gekennzeichnet sind.

Diese Aufgabe wird erfindungsgemäß durch eine Zusammensetzung enthaltend eine

> Isocyanatkomponente A), umfassend wenigstens ein cycloaliphatisches oder araliphatisches Diisocyanat, eine
> Polyolkomponente B), umfassend wenigstens ein Polyol mit einer OH-Zahl von 80 bis 1000 mg KOH/g, eine
> Additivkomponente C), umfassend wenigstens ein internes Entformungsmittel, wobei es sich bei dem Entformungsmittel um wenigstens ein Mono- und/oder Dialkylphosphat handelt, das 8 bis 12 Kohlenstoffatome, im Alkylrest aufweist, und eine
> Katalysatorkomponente D), umfassend wenigstens eine anorganische Metallkomplexverbindung als thermolatenter Katalysator,
> dadurch gekennzeichnet, dass der thermolatente Katalysator einen Quotient der Reaktionsgeschwindigkeiten zwischen katalysierter Reaktion und unkatalysierter Reaktion bei 30 °C von $\leq$ 5,0 und bei 60 °C von $\geq$ 1,1 aufweist,

gelöst.

Es wurde überraschenderweise gefunden, dass die erfindungsgemäße Zusammensetzung eine verlängerte Topfzeit gegenüber katalysatorfreien Systemen aufweist und sich zudem besser entformen lässt.

Im Rahmen der vorliegenden Erfindung wird unter einem thermolatenten Katalysator ein Katalysator verstanden, bei dem der Quotient der Reaktionsgeschwindigkeiten zwischen katalysierter Reaktion und unkatalysierter Reaktion bei 30 °C $\leq$ 5,0 und bei 60 °C $\geq$ 1,1 ist. Hierbei ist es weiterhin bevorzugt, wenn der Quotient der Reaktionsgeschwindigkeiten zwischen katalysierter Reaktion und unkatalysierter Reaktion bei 30 °C $\leq$ 4,0 und bei 60 °C $\geq$ 1,15 ist und besonders bevorzugt bei 30 °C $\leq$ 3,0 und bei 60 °C $\geq$ 1,2 ist. Dies wird anhand der Modellreaktion zwischen einem HDI

basiertem Isocyanurat und 2-Ethylhexanol gemessen, wobei die Isocyanatgruppen und die Hydroxylgruppen im equimolaren Verhältnis eingesetzt werden. Es gilt das Geschwindigkeitsgesetz

$$v_R = -\frac{\Delta c_{NCO}}{\Delta t} \qquad (1),$$

wobei $v_R$ die Reaktionsgeschwindigkeit darstellt. Die Konzentration der Isocyanatgruppen $c_{NCO}$ wird dabei zum Zeitpunkt des Mischens und nach 2 h bei 30 °C mittels Titration gemäß DIN 53 185 (NCO-Gehalt) bestimmt, sowie nach 2 weiteren Stunden bei 60 °C. Die Konzentration des Katalysators liegt dabei zwischen 160 und 200 μmol Zentralatom pro kg Polyisocyanathärter, wobei unter dem Begriff Zentralatom das jeweilige Metallatom der anorganischen Metallkomplexverbindung zu verstehen ist.

$$\text{Quotient bei 30°C:} \quad \frac{v_{R,30°C,katalysiert}}{v_{R,30°C,unkatalysiert}} = \frac{c_{NCO\,Start} - c_{NCO\,2h,30\,°C,katalysiert}}{c_{NCO\,Start} - c_{NCO\,2h,30\,°C,unkatalysiert}}$$

$$\text{Quotient bei 60 °C:} \quad \frac{v_{R,60°C,katalysiert}}{v_{R,60°C,unkatalysiert}} = \frac{c_{NCO\,Start} - c_{NCO\,2h,30\,°C,2h,60°C,katalysiert}}{c_{NCO\,Start} - c_{NCO\,2h,30\,°C,2h,60°C,unkatalysiert}}$$

Im Rahmen der vorliegenden Erfindung ist ein internes Entformungsmittel ein Entformungsmittel, das ein Bestandteil der erfindungsgemäßen Zusammensetzung ist. Hingegen wird vorliegend unter einem externen Entformungsmittel ein Entformungsmittel verstanden, welches auf die Oberfläche der Gießform aufgebracht wird und kein Bestandteil der erfindungsgemäßen Zusammensetzung ist.

Im Rahmen der vorliegenden Erfindung wird unter dem Begriff transparent verstanden, dass der transparente Formkörper bei einer Dicke von 2 mm und bei der Normlichtart D65 (definiert in DIN 6173) eine Transmission von ≥ 90 % aufweist. Wobei dieser Transmissionswert bei der optionalen Mitverwendung von UV-Stabilisatoren und Farbstoffen von dem vorstehend genannten Wert von ≥ 90 % abweichen kann.

Gemäß einer ersten bevorzugten Ausfiihrungsform der Erfindung umfasst die anorganische Metallkomplexverbindung Bismuth, Titan, Zink, Zirkonium oder Zinn, bevorzugt Bismuth oder Zinn und besonders bevorzugt Zinn als Zentralatom. Diese zeichnen sich unter anderem durch eine verbesserte Aktivität bei höheren Temperaturen aus.

In einer weiteren bevorzugten Ausführungsform weist die anorganische Metallkomplexverbindung wenigstens einen Liganden auf, der wenigstens eine Ether-, Thioether- oder Aminogruppe aufweist und/oder ein Chelatligand ist, bevorzugt wenigstens eine Aminogruppe aufweist und/oder ein Chelatligand ist und besonders bevorzugt wenigstens eine Aminogruppe aufweist und ein Chelatligand ist. Hieraus ergibt sich der Vorteil, dass sich mit diesen Liganden die thermolatente Eigenschaft der Katalysatoren weiter erhöhen lässt.

In einer weiteren bevorzugten Ausfiihrungsform wird die anorganische Metallkomplexverbindung aus der Gruppe der Formeln I, II oder III ausgewählt:

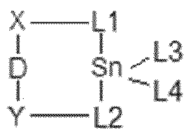

(I),

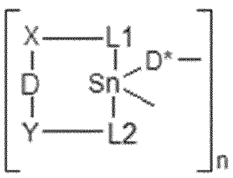

(II),

mit n > 1,

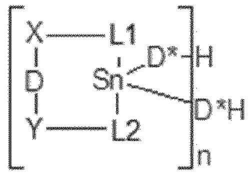

(III),

mit n > 1, wobei gilt:

D steht für -O-, -S- oder -N(R1)-,

wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest

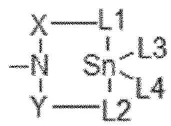

steht,
oder R1 und L3 zusammen für -Z-L5- stehen;

D* steht für -O- oder -S-;

X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(RS)-C(R6)(R7)- oder

ortho-Arylenresten der Formeln

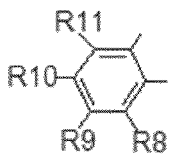 oder 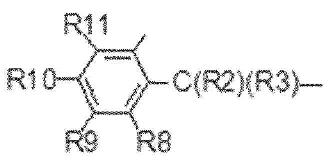 ,

wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;

L1, L2 und L5 stehen unabhängig voneinander für -O-, -S-, -OC(=O)-, -OC(=S)-, -SC(=O)-, - SC(=S)-, $-OS(=O)_2O-$, $-OS(=O)_2-$ oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;

L3 und L4 stehen unabhängig voneinander für -OH, -SH, -OR13, -Hal, -OC(=O)R14, -SR15, - OC(=S)R16, $-OS(=O)_2OR17$, $-OS(=O)_2R18$ oder -NR19R20, oder L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen,

bevorzugt steht D für -N(R1)-, wobei R1 Wasserstoff oder ein Alkyl-, Aralkyl-, Alkaryl- oder

Arylrest mit bis zu 20 C-Atomen ist oder der Rest

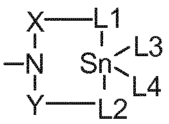

ist und besonders bevorzugt steht D für -N(R1)-, wobei R1 Wasserstoff oder ein Methyl-, Ethyl-, Propyl-, Butyl-, Hexyl-, Octyl-, Ph-, oder $CH_3Ph$-Rest oder der Rest

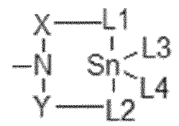

ist und wobei Propyl-, Butyl-, Hexyl-, und Octyl für alle isomeren Propyl-, Butyl-, Hexyl- sowie Octylreste stehen.

Vorzugsweise stehen die Einheiten L1-X, L2-Y und L5-Z für $-CH_2CH_2O-$, $-CH_2CH(Me)O-$, $-CH(Me)CH_2O-$, $-CH_2C(Me)_2O-$, $-C(Me)_2\ CH_2O-$ oder $-CH_2C(=O)O-$,

Besonders bevorzugt steht die Einheit L1-X-D-Y-L2 für: $HN[CH_2CH_2O-]_2$, $HN[CH_2CH(Me)O-]_2$, $HN[CH_2CH(Me)O-][CH(Me)CH_2O-]$, $HN[CH_2C(Me)_2O-]_2$, $HN[CH_2C(Me)_2O-][C(Me)_2CH_2O-]$, $HN[CH_2C(=O)O-]_2$, $MeN[CH_2CH_2O-]_2$, $MeN[CH_2CH(Me)O-]_2$, $MeN[CH_2CH(Me)O-]\ [CH(Me)CH_2O-]$, $MeN[CH_2C(Me)_2O-]_2$, $MeN[CH_2C(Me)_2O-][C(Me)_2CH_2O-]$, $MeN[CH_2C(=O)O-]_2$, $EtN[CH_2CH_2O-]_2$, $EtN[CH_2CH(Me)O-]_2$, $EtN[CH_2CH(Me)O-][CH(Me)CH_2O-]$, $EtN[CH_2C(Me)_2O-]_2$, $EtN[CH_2C(Me)_2O-][C(Me)_2CH_2O-]$, $EtN[CH_2C(=O)O-]_2$, $PrN[CH_2CH_2O-]_2$, $PrN[CH_2CH(Me)O-]_2$, $PrN[CH_2CH(Me)O-][CH(Me)CH_2O-]$, $PrN[CH_2C(Me)_2O-]_2$, $PrN[CH_2C(Me)_2O-][C(Me)_2CH_2O-]$, $PrN[CH_2C(=O)O-]_2$, $BuN[CH_2CH_2O-]_2$, $BuN[CH_2CH(Me)O-]_2$, $BuN[CH_2CH(Me)O-][CH(Me)CH_2O-]$, $BuN[CH_2C(Me)_2O-]_2$, $BuN[CH_2C(Me)_2O-][C(Me)_2CH_2O-]$, $BuN[CH_2C(=O)O-]_2$, $HexN[CH_2CH_2O-]_2$, $HexN[CH_2CH(Me)O-]_2$, $HexN[CH_2CH(Me)O-][CH(Me)CH_2O-]$, $HexN[CH_2C(Me)_2O-]_2$, $HexN[CH_2C(Me)_2O-][C(Me)_2CH_2O-]$, $HexN[CH_2C(=O)O-]_2$, $OctN[CH_2CH_2O-]_2$, $OctN[CH_2CH(Me)O-]_2$, $OctN[CH_2CH(Me)O-][CH(Me)CH_2O-]$, $OctN[CH_2C(Me)_2O-]_2$, $OctN[CH_2C(Me)_2O-][C(Me)_2CH_2O-]$, $OctN[CH_2C(=O)O-]_2$, wobei Pr, Bu, Hex und Oct für alle isomeren Propyl-, Butyl- sowie Octylreste stehen können, $PhN[CH_2CH_2O-]_2$, $PhN[CH_2CH(Me)O-]_2$, $PhN[CH_2CH(Me)O-][CH(Me)CH_2O-]$, $PhN[CH_2C(Me)_2O-]_2$, $PhN[CH_2C(Me)_2O-][C(Me)_2CH_2O-]$, $PhN[CH_2C(=O)O-]_2$,

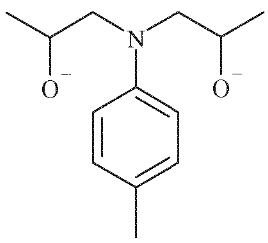 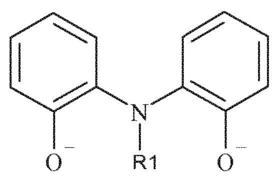 oder 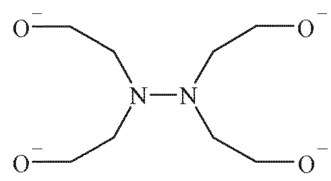 .

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome ('Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B.

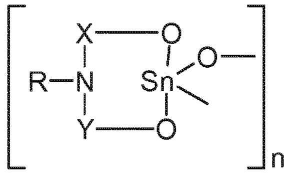

mit n > 1 (vgl. Formel II). Bei niedrigen Oligomerisierungsgraden findet man häufig cyclische, bei höheren Oligomerisierungsgraden lineare Oligomere mit OH- bzw. SH-Endgruppen (vgl. Formel III).

In den Fällen, in denen die Zinnverbindungen Liganden mit freien OH- und/oder NH-Resten aufweisen, kann der Katalysator bei der Polyisocyanat-Polyadditionsreaktion in das Produkt eingebaut werden.

Gemäß einer weiteren ganz besonders bevorzugten Ausführungsform wird die anorganische Metallkomplexverbindung aus der Gruppe bestehend aus 4,12-Dibutyl-2,6,10,14-tetramethyl-1,7,9,15-tetraoxa-4,12-diaza-8-stannaspirol[7.7]pentadecan, 4,12-Dibutyl-1,7,9,15-tetraoxa-4,12-diaza-8-stannaspirol[7.7]pentadecan, 4,12-Dimethyl-1,7,9,15-tetraoxa-4,12-diaza-8-stannaspirol[7.7]pentadecan, 2,4,6,10,12,14-Hexamethyl-1,7,9,15-tetraoxa-4,12-diaza-8-stannaspirol[7.7]pentadecan, oder 2,2-Dichlor-6-methyl-1,3,6,2-dioxazastannocan ausgewählt.

Vorzugsweise kann die anorganische Metallkomplexverbindung in einer Konzentration von > 0 bis ≤ 2000 mg, bevorzugt von ≥ 0,1 bis ≤ 1000 mg, besonders bevorzugt von ≥ 5 bis ≤ 300 mg und ganz besonders bevorzugt von ≥ 10 bis ≤ 100 mg, in mg Zentralatom je kg Gesamtgewicht der erfindungsgemäßen Zusammensetzung, enthalten sein.

In einer weiteren bevorzugten Ausführungsform umfasst das interne Entformungsmittel wenigstens eine Verbindung, die einen pKs-Wert von ≤ 4,60 aufweist.. Der pKs-Wert kann beispielsweise durch Säure-Base Titration mittels pH Elektrode bestimmt werden.

Die Mono- und Dialkylphosphate weisen 8 bis 12 Kohlenstoffatome, im Alkylrest auf.

Geeignete interne Entformungsmittel sind beispielsweise Octylphosphat, Dioctylphosphat, Decylphosphat, Isodecylphosphat, Diisodecylphosphat, Isodecyloxyethylphosphat, Di-(decyloxyethyl)phosphat, Dodecylphosphat, Didoceylphosphat, Tridecanolephosphat, Bis(tridecanol)-phosphat, Stearylphospat, Distearylphosphat und beliebige Gemische solcher Verbindungen.

In einer weiteren bevorzugten Ausführungsform ist das interne Entformungsmittel ausgewählt aus der Gruppe bestehend aus Cs-Monophosphorsäureestem, Cs-Diphosphorsäureestem, $C_{10}$-Monophosphorsäureestern, $C_{10}$-Diphosphorsäureestern und/oder Mischungen daraus, wobei die Mischungen besonders bevorzugt sind. Ganz besonders bevorzugt ist eine Mischung enthaltend 40 Gew.-% Monophosphorsäureester und 60 Gew.-% Diphosphorsäureester.

Vorzugsweise kann das interne Entformungsmittel in Mengen von 0,01 bis 6,00 Gew.-%, besonders bevorzugt 0,02 bis 4,00 Gew.-% und besonders bevorzugt 0,10 bis 3,00 Gew.-%, bezogen auf das Gesamtgewicht der Zusammensetzung, in der erfindungsgemäßen Zusammensetzung enthalten sein.

Die Isocyanatkomponente A) umfasst wenigstens ein cycloaliphatisches oder araliphatisches Diisocyanat.

In Weiterbildung der Erfindung ist vorgesehen, dass die Isocyanatkomponente A) ein Gemisch aus a) wenigstens einem cycloaliphatischen oder araliphatischen Diisocyanat und b) wenigstens einem acyclischen, aliphatischen Di- oder Triisocyanat oder einem Oligomer eines aliphatischen Diisocyanats, bevorzugt ein Gemisch aus a) wenigstens einem cycloaliphatischen Diisocyanat oder araliphatischen Diisocyanat und b) wenigstens einem Oligomer eines aliphatischen Diisocyanats umfasst.

Hierbei ist es besonders bevorzugt, dass das Gemisch in der Isocyanatkomponente A) in einem Gewichtsverhältnis von a) zu b) zwischen 55:45 und 94:6, bevorzugt zwischen 60:40 und 90:10 und besonders bevorzugt zwischen 70:30 und 85:15 vorliegt.

Ebenfalls weiterhin bevorzugt ist, dass das Oligomer eines aliphatischen Diisocyanats wenigstens eine Allophanat-, eine Biuret-, eine Uretdion-, eine Isocyanurat- und/oder eine Urethangruppe, bevorzugt wenigstens eine Allophanat-, eine Biuret- und/oder eine Urethangruppe und besonders bevorzugt wenigstens eine Allophanat- und/oder eine Biuretgruppe aufweist.

Ganz besonders bevorzugt ist hierbei, dass das aliphatische Diisocyanat ein lineares aliphatisches Diisocyanat, bevorzugt 1,6-Hexamethylendiisocyanat, ist.

Gemäß einer weiteren bevorzugten Ausführungsform umfasst die Isocyanatkomponente A) wenigstens 3,5,5-Trimethyl-1-isocyanato-3-isocyanatomethylcyclohexan, 4,4'-Methylenbis(cyclohexylisocyanat), 1,3-Bis(isocyanatomethyl)benzol, 1,4-Bis(isocyanatomethyl)benzol, 2,5-Bis(isocyanatomethyl)-bicyclo[2.2.1]heptan, 2,6-Bis(isocyanatomethyl)-bicyclo[2.2.1]heptan, 1,3-Diisocyanato-2-Methylcyclohexan und/oder 1,3-Diisocyanato-6-Methylcyclohexan, bevorzugt wenigstens 3,5,5-Trimetlryl-1-isocyanato-3-isocyanatomethylcyclohexan und/oder 4,4'-Methyl-biscyclohexylisocyanat und besonders bevorzugt 3,5,5-Trimethyl-1-isocyanato-3-isocyanatomethylcyclohexan.

Die Polyolkomponente B) umfasst wenigstens ein Polyol mit einer OH-Zahl von 80 bis 1000 mg KOH/g. Die Bestimmung der OH-Zahl erfolgt nach DIN 53240 T.2.

Geeignete Polyole weisen vorzugsweise eine Hydroxylgruppen-Funktionalität von 1,8 bis 6,5, bevorzugt von

2,5 bis 4,5, besonders bevorzugt von 2,8 bis 3,2 auf.

Gemäß einer weiteren bevorzugten Ausführungsform umfasst die Polyolkomponente B) wenigstens ein Polyetherpolyol oder ein Polyesterpolyol, bevorzugt wenigstens ein Polyetherpolyol und besonders bevorzugt ein Trimethylolpropan gestartetes Polyetherpolyol oder Mischungen eines Trimethylolpropan gestarteten Polyetherpolyols mit wenigstens einem weiteren Polyetherpolyol.

Das Polyetherpolyol weist bevorzugt eine OH-Zahl von 80 bis 1000 mg KOH/g, besonders bevorzugt von 110 bis 800 mg KOH/g, ganz besonders bevorzugt von 150 bis 600 mg KOH/g auf. Die Bestimmung der OH-Zahl erfolgt nach DIN 53240 T.2.

Das Polyetherpolyol weist bevorzugt eine Viskosität bei 23 °C von 200 bis 6 000 mPa.s, besonders bevorzugt von 800 bis 5 800 mPa.s, ganz besonders bevorzugt von 1 500 bis 4 500 mPa.s auf.

In einer weiteren bevorzugten Ausfiihrungsform stehen die Isocyanatgruppen der Isocyanatkomponente A) und die Hydroxylgruppen der Polyolkomponente B) in einem Verhältnis von 1,50:1,00 bis 1,00:1,50, bevorzugt von 1,20:1,00 bis 1,00:1,20 und besonders bevorzugt von 1,15:1,00 bis 1,05:1,00.

Die aus der erfindungsgemäßen Zusammensetzung erhältlichen transparenten Formkörper zeichnen sich im Allgemeinen bereits als solche, d.h. ohne Zusatz entsprechender Stabilisatoren, durch eine sehr gute Lichtbeständigkeit aus.

Unabhängig von der jeweiligen Ausführungsform kann die erfindungsgemäße Zusammensetzung jedoch weitere Hilfs- und Zusatzstoffe enthalten. Diese werden vorzugsweise aus der Gruppe bestehend aus UV-Stabilisatoren, Farbstoffen und Antioxidantien ausgewählt und können sowohl einzeln oder in beliebigen Mischungen enthalten sein. Im Fall der Mitverwendung ist es möglich, dass die gegebenenfalls enthaltenen Hilfs- und Zusatzstoffe sowohl in einer der Komponenten A) bis D) als auch separat in der Zusammensetzung enthalten sein können. Hierbei ist es besonders bevorzugt, wenn die gegebenenfalls mitzuverwendenden Hilfs- und Zusatzstoffe in der Additivkomponente C) enthalten sind.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1 -4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxybenzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten UV-Stabilisatoren können sowohl einzeln als auch in beliebigen Kombinationen untereinander zum Einsatz kommen.

Besonders bevorzugte UV-Stabilisatoren für die erfindungsgemäße Zusammensetzung sind solche, die Strahlung einer Wellenlänge < 400 nm vollständig absorbieren, so dass bei einer Verwendung der erfindungsgemäßen Zusammensetzung als Brillengläser ein vollständiger Schutz des Auges vor UV-Strahlung gegeben ist. Hierzu zählen beispielsweise die genannten Benzotriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Die beispielhaft genannten UV-Stabilisatoren können vorzugsweise in Mengen von 0,0001 bis 3,5 Gew.-%, besonders bevorzugt von 0,001 bis 3,0 Gew.-% und ganz besonders bevorzugt von 0,01 bis 2,0 Gew.-%, berechnet als Gesamtmenge an eingesetzten UV-Stabilisatoren, bezogen auf das Gesamtgewicht der erfindungsgemäßen Zusammensetzung, enthalten sein.

Geeignete Farbstoffe für die erfindungsgemäße Zusammensetzung können vorzugsweise aus der Gruppe, bestehend aus kommerziell erhältlichen Anthrachinonfarbstoffen, wie z.B. Exalite Blue 78-13 der Firma Exciton, Inc., Dayton, Ohio, USA oder Macrolex Violet B, Macrolex Blue RR und Macrolex Violet 3R der Fa. Lanxess AG, Leverkusen, DE und beliebigen Mischungen davon, ausgewählt werden.

Die beispielhaft genannten Farbstoffe können vorzugsweise in Mengen von 0,0001 bis 3,5 Gew.-%, besonders bevorzugt von 0,001 bis 3,0 Gew.-% und ganz besonders bevorzugt von 0,01 bis 2,0 Gew.-%, berechnet als Gesamtmenge an eingesetzten Farbstoffen, bezogen auf das Gesamtgewicht der erfindungsgemäßen Zusammensetzung,

enthalten sein.

Geeignete Antioxidantien sind vorzugsweise sterisch gehinderten Phenole, welche vorzugsweise aus der Gruppe, bestehend aus 2,6-Di-tert-butyl-4-methylphenol (Ionol), Pentaerythrit-tetrakis(3-(3,5-di-tert-butyl-4-hydroxy-phenyl)propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat], ausgewählt werden können. Die vorstehend genannten Antioxidantien können bei Bedarf sowohl einzeln als auch in beliebigen Kombinationen untereinander enthalten sein.

Die beispielhaft genannten Antioxidantien können vorzugsweise in Mengen von 0,001 bis 3,5 Gew.-%, besonders bevorzugt von 0,01 bis 3,0 Gew.-% und ganz besonders bevorzugt von 0,02 bis 2,0 Gew.-%, berechnet als Gesamtmenge an eingesetzten Antioxidantien, bezogen auf die Gesamtmenge der erfindungsgemäßen Zusammensetzung, mitverwendet.

Im Allgemeinen kann die erfindungsgemäße Zusammensetzung die einzelnen Komponenten in beliebigen Mengenverhältnissen enthalten. In einer bevorzugten Ausführungsform besteht die erfindungsgemäße Zusammensetzung aus den Komponenten A) bis D).

Gemäß einer ganz besonders bevorzugten Ausfiihrungsform enthält die erfindungsgemäße Zusammensetzung 45-65 Gew.-Teile der Isocyanatkomponente A), umfassend wenigstens ein cycloaliphatisches oder araliphatisches Diisocyanat, 30-50 Gew.-Teile der Polyolkomponente B), umfassend wenigstens ein Polyol mit einer OH-Zahl von 80 bis 1000 mg KOH/g, 0,1 bis 10 Gew.-Teile der Additivkomponente C), umfassend wenigstens ein internes Entformungsmittels, und 0,0001 bis 0,2 Gew.-Teile der Katalysatorkomponente D), umfassend wenigstens eine anorganische Metallkomplexverbindung als thermolatenter Katalysator, wobei der thermolatente Katalysator einen Quotient der Reaktionsgeschwindigkeiten zwischen katalysierter und unkatalysierter Reaktion bei 30 °C $\leq$ 5,0 und bei 60 °C $\geq$ 1,1 aufweist und die jeweiligen Gewichtsteile gegebenenfalls so normiert werden, dass die Summe der Gewichtsteile 100 ergibt.

Die verschiedenen Herstellungsmethoden für die erfindungsgemäß zu verwendenden Zinn(IV)-Verbindungen bzw. ihrer Zinn(II)-Precursoren sind u.a. beschrieben in: J. Organomet. Chem. 2009 694 3184-3189, Chem. Heterocycl. Comp. 2007 43 813-834, Indian J. Chem. 1967 5 643-645 sowie in darin angeführter Literatur.

Die Herstellung der oben angegebenen Di- oder Triisocyanate der Isocyanatkomponente A) kann beispielsweise aus den entsprechenden Aminverbindungen nach bekannten Verfahren, z.B. durch Phosgenierung oder auf phosgenfreiem Weg, beispielsweise durch Urethanspaltung, erfolgen. Aus den angegebenen Diisocyanaten lassen sich beispielsweise Polyisocyanate mit Uretdion-, Isocyanurat-, Allophanat-, Biuret-, Iminooxadiazindion- und/oder Oxadiazintrionstruktur herstellen, wie sie unter anderem in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben sind.

Geeignete Polyesterpolyole der Polyolkomponente B) sind beispielsweise nach Methoden wie sie beispielsweise in "Ullmanns Encyclopädie der Technischen Chemie", Verlag Chemie Weinheim, 4. Auflage (1980), Band 19, Seiten 61ff. oder von H. Wagner und H.F. Sarx in "Lackkunstharze", Carl Hanser Verlag, München (1971), Seiten 86 bis 152 ausführlich beschrieben sind zugänglich.

Geeignete Polyetherpolyole der Polyolkomponente B) sind beispielsweise nach den in der DE-A 2 622 951, Spalte 6, Zeile 65 - Spalte 7, Zeile 47, oder der EP-A 0 978 523 Seite 4, Zeile 45 bis Seite 5, Zeile 14 beschriebenen Verfahren, z.B. durch Alkoxylierung geeigneter Startermoleküle mit Alkylenoxiden, zugänglich.

Als Startermoleküle zur Herstellung der erfindungsgemäß eingesetzten Polyetherpolyole eignen sich beliebige Verbindungen des Molekulargewichtsbereiches 60 bis 200. Bevorzugt sind Ausgangsverbindungen, die frei von aromatischen Strukturen sind. Des Weiteren tragen diese Ausgangsverbindungen bevorzugt 3 bis 6, besonders bevorzugt bis zu 4 reaktive Wasserstoffatome. Hierbei handelt es sich vorzugsweise um einfache aliphatische Alkohole mit 3 bis 6 Kohlenstoffatomen, welche beispielsweise ausgewählt werden können aus der Gruppe, bestehend aus 1,2,3-Propantriol, 1,1,1-Trimethylolethan, 1,2,6-Hexantriol, 1,1,1-Trimethylolpropan, 2,2-Bis(hydroxymethyl)-1,3-propandiol, 1,2,4- und 1,3,5-Trihydroxy-cyclohexan und Sorbit, um aliphatische Diamine, welche beispielsweise ausgewählt werden können aus der Gruppe, bestehend aus Ethylendiamin, 1,3-Propylendiamin und die isomeren Butylendiamine, Pentylendiamine und Hexylendiamine, die gegebenenfalls durch Alkylreste mit 1 bis 4 Kohlenstoffatomen an einem Stickstoffatom monosubstituiert sein können, oder auch um aliphatische Polyamine, welche beispielsweise ausgewählt werden können aus der Gruppe, bestehend aus Diethylentriamin und Triethylentetramin. Eine weitere bevorzugte Klasse geeigneter Startermoleküle sind darüber hinaus Alkanolamine, wie z.B. Ethanolamin, Dialkanolamine, wie z.B. Diethanolamin, und Trialkanolamine, wie z.B. Triethanolamin. Diese Startermoleküle können sowohl alleine als auch in Form beliebiger Gemische untereinander eingesetzt werden.

Für die Alkoxylierungsreaktion geeignete Alkylenoxide sind insbesondere Ethylenoxid und Propylenoxid. Sie können sowohl alleine als auch in beliebiger Reihenfolge nacheinander oder in Form beliebiger Mischungen untereinander mit den genannten Startermolekülen umgesetzt werden. Besonders bevorzugte Polyetherpolyole sind Anlagerungsprodukte von Ethylenoxid und/oder Propylenoxid an 1,2,3-Propantriol, 1,1,1-Trimethylolpropan, Ethylendiamin und/oder Pentaerythrit. Ganz besonders bevorzugte Polyetherpolyole sind solche, bei deren Herstellung als Alkylenoxid

ausschließlich Propylenoxid zum Einsatz kommt.

Daneben stellen auch Polytetramethylenetherglykole, wie sie beispielsweise gemäß *Angew. Chem.* **1960** 72 927 durch Polymerisation von Tetrahydrofuran erhältlich sind, geeignete Polyetherpolyole dar.

Bei der Herstellung der erfindungsgemäßen Zusammensetzung können neben den Polyetherpolyolen gegebenenfalls in untergeordneten Mengen auch einfache niedermolekulare, mindestens trifunktionelle Alkohole mitverwendet werden. Diese weisen vorzugsweise Molekulargewichte von 92 bis 182 auf. Diese kommen, falls überhaupt, in Mengen von maximal bis zu 10 Gew.-%, bevorzugt bis zu 5 Gew.-%, bezogen auf die Gesamtmenge an Polyetherpolyol zum Einsatz. In einer bevorzugten Ausführungsform ist das Polyetherpolyol frei von niedermolekularen, mindestens trifunktionellen Alkoholen.

Die erfindungsgemäße Zusammensetzung lässt sich beispielsweise nach einem Verfahren herstellen bei dem die vorstehend genannten Komponenten A) bis D) miteinander vermischt werden. Vorzugsweise werden die Komponenten A) bis D) hierbei in den oben angegebenen Mengenverhältnissen eingesetzt.

In einer weiteren bevorzugten Ausführungsform des erfindungsgemäßen Verfahrens werden eine oder mehrere der Komponenten A) bis D) im Vorwege miteinander vermischt. So ist es beispielsweise möglich, dass die Additivkomponente C) und/oder die Katalysatorkomponente D) mit der Isocyanatkomponente A) vermischt werden und diese Mischung zu der Polyolkomponente B) gegeben wird. Alternativ ist es ebenfalls möglich, dass die Additivkomponente C) und/oder die Katalysatorkomponente D) mit der Polyolkomponente B) vermischt werden und diese Mischung zu der Isocyanatkomponente A) gegeben wird.

In einer weiteren bevorzugten Ausführungsform wird die Additivkomponente C) mit der Isocyanatkomponente A) vermischt und die erhaltene Mischung gelagert. Vorzugsweise wird die hergestellte Mischung 1 bis 10 Stunden oder auch länger gelagert, bevor die Komponenten B) und D) hinzugegeben werden. Die Mischung und/oder die Lagerung können bei einer Temperatur von 10 °C bis 100 °C erfolgen.

Die erfindungsgemäße Zusammensetzung kann, gegebenenfalls unter Erwärmen, gehärtet werden, so dass ein Elastomer erhalten wird. Daher ist ein weiterer Gegenstand der Erfindung ein solches Verfahren zur Herstellung eines Elastomers. Die nach dem erfindungsgemäßen Verfahren erhältlichen Elastomere sind ein weiterer Gegenstand der Erfindung.

Zur Herstellung des erfindungsgemäßen Elastomers kann die erfindungsgemäße Zusammensetzung gemäß einer weiteren bevorzugten Ausführungsform bei Temperaturen zwischen -10 °C und 80 °C, bevorzugt zwischen 10 und 40 °C, besonders bevorzugt zwischen 20 und 30 °C in eine Gießform gegeben werden. Die gefüllte Gießform kann 0 bis 10 Stunden bei Temperaturen zwischen -10 °C und 80 °C, bevorzugt zwischen 10 und 40 °C, besonders bevorzugt zwischen 20 und 30 °C gelagert und anschließend über 0,5-48 Stunden, bevorzugt 1-24 Stunden auf bis zu 150 °C, bevorzugt bis zu 130 °C erwärmt werden. Die Erwärmung kann in Stufen erfolgen.

Nach Füllung der Gießform kann auf die maximale Temperatur erwärmt werden, um eine gute Durchhärtung zu erhalten. Es können auch mehr als zwei Temperaturhaltezeiten oder ein langsames kontinuierliche (z.B. lineares) Erwärmen verwendet werden. Nach dem Härten kann langsam, üblicherweise bei Temperaturen zwischen 20 und 70 °C abgekühlt werden. Es kann auch ein Temperschritt mit einer Temperatur unterhalb der höchsten Härtungstemperatur gewählt werden. Ist die Form abgekühlt, können die Bauteile der Gießform entfernt werden. Ein nachträgliches Tempern bei Temperaturen > 80 °C kann gegebenenfalls vorhandene Spannungen in den transparenten Formkörpem zu reduzieren.

Die Gießform kann beispielsweise aus Glas hergestellt sein. Gegebenenfalls kann vor dem Einfüllen der erfindungsgemäßen Zusammensetzung zusätzlich ein externes Entformungsmittel auf die in Kontakt mit der erfindungsgemäßen Zusammensetzung kommende Oberfläche der Gießform aufgebracht werden.

Die Gießform kann manuell gefüllt werden oder auch durch automatisierte Verfahren wie. z.B. Reaction Injection Molding (RIM), Reaction Transfer Molding (RTF) gefüllt werden. Für letztere ist es dann auch möglich die Gießform aus anderen Materialien, bevorzugt aus Metallen (wie z.B. Edelstahl aber auch Eisen, Nickel, Kupfer, Aluminium, Chrom, Silber, Gold, oder deren Legierungen) zu fertigen. Insbesondere kann die Manschette ebenfalls aus Metall gefertigt werden. Zum Mischen können Rührwerkzeuge, Statikmischer, schnelle bewegende Gefäße und dergleichen verwendet werden. Es ist auch vorteilhaft das Gießsystem zu entgasen. Hierzu kann Vakuum angelegt werden und/oder über einen Fallfilm die Oberfläche vergrößert werden, die eine Blasenbildung vermeidet.

Die erfindungsgemäße Zusammensetzung ist für eine Vielzahl von Anwendungen, beispielsweise zur Herstellung transparenter Formkörper geeignet. Deswegen ist ein weiterer Gegenstand der Erfindung die Verwendung der erfindungsgemäßen Zusammensetzung zur Herstellung transparenter Formkörper.

In einer weiteren bevorzugten Ausführungsform ist der transparente Formkörper eine optische Linse oder ein Teil einer optischen Linse, wobei die optische Linse eine Sammellinse, eine Streulinse, eine Verscheibung, ein Scheinwerfer oder ein Brillenglas und bevorzugt ein Brillenglas sein kann.

Nach Aushärten in der Gießform aus einem geeigneten Material, beispielsweise aus Glas, kann der transparente Formkörper durch herauslösen aus der Form erhalten werden. Hierbei zeigen sich die vorteilhaften Eigenschaften des erfindungsgemäßen Elastomers, da es sich durch ein sehr gutes Entformungsverhalten im Vergleich zu den herkömmlichen Elastomeren auf Polyurethanbasis auszeichnet.

Daher sind transparente Formkörper enthaltend ein erfindungsgemäßes Elastomer ein weiterer Gegenstand der Erfindung. Neben dem erfindungsgemäßen Elastomer kann der transparente Formkörper noch weitere Komponenten enthalten, so dass dieser auf die individuellen Anforderungen angepasst werden kann. Vorteile der aus dem erfindungsgemäßen Elastomer hergestellten transparenten Formkörper, bevorzugt optischen Linsen und besonders bevorzugt Brillengläsern sind beispielsweise eine hohe Schlagzähigkeit, eine gute Schleifbarkeit, Beschichtbarkeit oder sehr gute optische Eigenschaften, wie beispielsweise ein hoher Brechungsindex.

Die Erfindung wird im Folgenden an Hand von Beispielen näher erläutert.

## Beispiele

Alle Prozentangaben beziehen sich, soweit nichts Anderslautendes vermerkt, auf das Gewicht.

Sämtliche Viskositätsmessungen erfolgten mit einem Physica MCR 51 Rheometer der Fa. Anton Paar Germany GmbH (DE) nach DIN EN ISO 3219 bei den jeweils angegebenen Temperaturen.

Die Messung der Brechungsindices und Abbe-Zahlen erfolgte an einem Abbe-Refraktometer Modell AR4D der Firma A.KRÜSS Optronic GmbH bei 23 °C.

Transmission-Messungen nach ASTM D 1003 wurden mit einem Haze-Gard Plus der Fa. Byk bei Normlichtart D65 (definiert in DIN 6173) durchgefiihrt.

NCO-Gehalte wurden mittels Titration gemäß DIN 53 185 bestimmt.

**In den Beispielen eingesetzte Rohstoffe:**

| | |
|---|---|
| Desmodur® N 3300: | ein Isocyanurat haltiges Polyisocyanat des 1,6-Hexamethylendiisocyanats, Bayer MaterialScience AG, Leverkusen, DE |
| 2-Ethylhexanol: | Produkt der Fa. Aldrich, Taufkirchen, DE |
| Desmodur® I: | 3,5,5-Trimethyl-1-isocyanato-3-isocyanatomethylcyclohexan (Isophorondiisocyanat), Bayer MaterialScience AG, Leverkusen, DE |
| Desmodur® N 3200: | ein Biuret haltiges Polyisocyanat des 1,6-Hexamethylendiisocyanats, Bayer MaterialScience AG, Leverkusen, DE |
| Desmophen® 4011T: | trifunktionelles Polyetherpolyol, Bayer MaterialScience AG, Leverkusen, DE |
| Zelec® UN: | internes, saures Phosphatester-Entformungsmittel, Stepan Company, Northfield, IL, USA |

**Bestimmung Katalysatoraktivität (Thermolatenz)**

Alle Reaktionen zur Bestimmung der Katalysatoraktivität wurden unter einer trockenen Stickstoffatmosphäre durchgeführt. Die Katalysatoren aus Tabelle 1 wurden nach Standard-Literaturvorschriften erhalten (vgl. Chem. Heterocycl. Comp. 2007 43 813-834 und darin zitierte Literatur), DBTL wurde von der Fa. Kever Technologie, Ratingen, DE, Zinknaphthenat von der Fa. Alfa Aesar GmbH & Co KG, DE bezogen.

Die Katalysatormenge wurde zur besseren Vergleichbarkeit der Aktivität der erfindungsgemäß einzusetzenden Katalysatoren und der Katalysatoren aus den Vergleichsbeispielen als μmol Sn bzw. Zn pro kg Polyisocyanathärter angegeben.

Als Polyisocyanathärter wurde Desmodur® N 3300 und als Modellverbindung für die Isocyanatreaktive Komponente wurde genau ein Äquivalent 2-Ethylhexanol (bezogen auf die freien Isocyanatgruppen des Polyisocyanathärters) eingesetzt. Durch Zugabe von 10% (bezogen auf Desmodur® N 3300) n-Butylacetat wurde sichergestellt, über den gesamten Reaktionsverlauf hinreichend niedrigviskose Proben ziehen zu können, die eine genaue Erfassung des NCO-Gehaltes mittels Titration gemäß DIN 53 185 gestatten. Der zu Beginn der Reaktion ohne jedwede NCO-OH-Reaktion berechnete NCO-Gehalt beläuft sich dabei auf 12,2 %.

Für die Versuche wurden die Mischungen jeweils 2 h bei konstant 30°C gelagert und anschließend auf 60 °C erwärmt. Tabelle 2 zeigt die Abnahme des NCO-Gehaltes. Die Quotienten $Q_{30}$ und $Q_{60}$ wurden wie im Beschreibungsteil ausführlich erläutert bestimmt.

**Tabelle 1** Übersicht zu den verwendeten Katalysatoren zur Bestimmung der Katalysatoraktivität (DBTL sowie Kat. 1 und Zinknaphthenat Vergleich, Kat. 2 bis 5 erfindungsgemäß)

| **Katalysator** | **Strukturformel** | **SummenFormel** | **Molgewicht [g/mol]** | **Sn-Gehalt** |
|---|---|---|---|---|
| **DBTL (Vergleich)** | 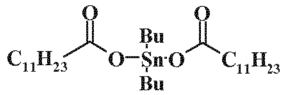 | C32H64O4Sn | 631,55 | 18,79% |
| **Kat. 1 (Vergleich)** | 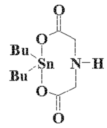 | C12H23NO4Sn | 364,01 | 32,61% |
| **Kat. 2 (erfindungsgemäß)** | 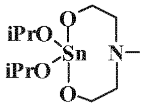 | C11H25NO4Sn | 354,02 | 33,53% |
| **Kat. 3 (erfindungsgemäß)** | 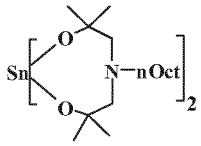 | C32H66N2O4Sn | 661,58 | 17,94% |
| **Kat. 4 (erfindungsgemäß)** | 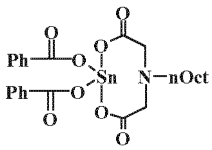 | C26H31NO8Sn | 604,23 | 19,64% |
| **Kat. 5 (erfindungsgemäß)** | 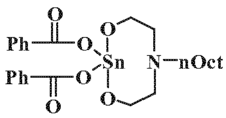 | C26H35NO6Sn | 576,26 | 20,60% |
| **Zinknaphthenat (Vergleich)** | | | | 0% |

**Tabelle 2** Übersicht über die Bestimmung der Katalysatoraktivität (Beispiel a - c und h: Vergleichsbeispiele, Beispiele d bis g: erfindungsgemäß)

1) µmol Sn/Zn pro kg Polyisocyanathärter

| **Nr.** | **Kat** | **Kat.-konz.** 1) | **NCO-Gehalt der Mischung nach [hh:mm]** 30 °C | | | | 60 °C | | | | **$Q_{30}$** | **$Q_{60}$** |
|---|---|---|---|---|---|---|---|---|---|---|---|---|
| | | | **00:30** | **1:00** | **1:30** | **2:00** | **2:30** | **3:00** | **3:30** | **4:00** | | |
| a | Ohne | 0 | 11,9 | 11,7 | 11,6 | 11,4 | 10,5 | 9,0 | 7,6 | 6,6 | | |
| b | DBTL | 177 | 7,9 | 6,4 | 5,9 | 5,3 | 2,7 | 1,8 | 1,3 | 1,1 | 8,6 | 2,0 |
| c | Kat. 1 | 185 | 8,9 | 7,1 | 5,7 | 4,7 | 0,9 | 0,3 | 0,2 | 0,1 | 9,4 | 2,2 |
| d | Kat. 2 | 194 | 11,9 | 11,6 | 11,4 | 11,3 | 9,2 | 7,8 | 6,1 | 4,3 | 1,1 | 1,4 |
| e | Kat. 3 | 168 | 12,0 | 11,6 | 11,5 | 11,1 | 9,1 | 7,4 | 5,9 | 4,1 | 1,4 | 1,4 |
| f | Kat. 4 | 168 | 11,6 | 11,2 | 10,9 | 10,7 | 8,9 | 6,6 | 4,8 | 4,1 | 1,9 | 1,4 |
| g | Kat. 5 | 168 | 11,8 | 11,7 | 11,5 | 11,2 | 104 | 7,6 | 6,7 | 5,8 | 1,3 | 1,1 |

(fortgesetzt)

| 1) µmol Sn/Zn pro kg Polyisocyanathärter | | | | | | | | | | | | |
|---|---|---|---|---|---|---|---|---|---|---|---|---|
| **Nr.** | **Kat** | **Kat.-konz. 1)** | **NCO-Gehalt der Mischung nach [hh:mm]** | | | | | | | | | |
| | | | **30 °C** | | | | **60 °C** | | | | $Q_{30}$ | $Q_{60}$ |
| | | | **00:30** | **1:00** | **1:30** | **2:00** | **2:30** | **3:00** | **3:30** | **4:00** | | |
| h | Znnaphthenat | 180 | | | | 8,15 | | 3,8 | | 1,35 | 5,1 | 1,7 |

**Entformungsversuche:**

Zuerst wurde eine Gießform hergestellt, indem zwischen zwei Glasplatten (Floatglas, 4 mm) eine Silikondichtung fixiert wurde, so dass eine 4 mm dicke und ca. 50 $cm^2$ große Gießkavität entstand.

Die Isocyanatkomponente A), bestehend aus 43,7 Gew.-Teilen Desmodur® I und 11 Gew.-Teilen Desmodur® N 3200, wurde mit 2 Gew.-Teilen Zelec® UN als Additivkomponente C) versetzt und 16 Stunden bei Raumtemperatur gerührt. Die jeweiligen Katalysatoren (50 mg Sn bezogen auf 1 kg der Gesamtzusammensetzung, DBTL, Katalysator 6: (4,12-Dibutyl-2,6,10,14-tetramethyl-1,7,9,15-tetraoxa-4,12-diaza-8-stannaspirol[7.7]pentadecan), Katalysator 7: (2,4,6,10,12,14-Hexamethyl-1,7,9,15-tetraoxa-4,12-diaza-8-stannaspirol[7.7]pentadecan) der Katalysatorkomponente D) wurden in 43,4 Gew.-Teile Desmophen® 4011 T als Polyolkomponente B) gelöst und anschließend mit der oben hergestellten Komponente bei 23 °C gemischt. Die Mischung wurde 30 min bei 10 mbar entgast und anschließend in die Gießform eingebracht. Die Masse wurde in einem Umlufttrockenschrank entsprechend des angegebenen Temperaturprofils gehärtet und nach einem Tag bei Raumtemperatur entformt.

**Tabelle 3** Ergebnisse der durchgeführten Versuche zur Entformung der hergestellten Elastomere.

| Beispiel | Katalysator | Härtungsprofil | Entformung |
|---|---|---|---|
| 1 (Vergleich) | Ohne | Kurz | Nein |
| 2 (Vergleich) | DBTL | Kurz | Nein |
| 3 (erfindungsgemäß) | Katalysator 6 | Kurz | Ja |
| 4 (erfindungsgemäß) | Katalysator 7 | Kurz | Ja |
| 5 (Vergleich) | Ohne | Lang | Nein |
| 4 (Vergleich) | DBTL | Lang | Nein |
| 5 (erfindungsgemäß) | Katalysator 6 | Lang | Ja |
| 6 (erfindungsgemäß) | Katalysator 7 | Lang | Ja |

Härtungsprofil kurz: 4 h 20 °C, in 0,5 h linear auf 60 °C, 2 h 60 °C, in 0,5 h linear auf 105 °C, 2 h 105 °C, in 1 h auf Raumtemperatur abkühlen.

Härtungsprofil lang: 4 h 20 °C, in 13 h linear auf 105 °C, 2 h 105 °C, in 1 h auf Raumtemperatur abkühlen.

Ohne bzw. mit DBTL als Katalysator haftete das Polyurethan so stark am Glas, dass keine Entformung möglich war und die Glasplatten unter der Belastung während der Entformung zerbrachen. Dagegen lassen sich die erfindungsgemäßen Elastomere unabhängig vom gewählten Temperaturprofil sehr gut entformen.

**Viskositätsmessungen:**

Die Isocyanatkomponente A) aus Tabelle 4 wurde mit 2 Gew.-%, bezogen auf die gesamte Masse aus Isocyanatkomponente A) und Polyolkomponente B), Zelec® UN versetzt und einen Tag bei Raumtemperatur gerührt. Die jeweiligen Katalysatoren (50 mg Sn bezogen auf 1 kg der Gesamtzusammensetzung, DBTL, Katalysator 6: (4,12-Dibutyl-2,6,10,14-tetramethyl-1,7,9,15-tetraoxa-4,12-diaza-8-stannaspirol[7.7]pentadecan), wurden in der entsprechenden Menge Desmophen® 4011 T als Polyolkomponente B) gelöst und anschließend mit der zuvor hergestellten Mischung aus der Isocyanatkomponente A) und der Additivkomponente C) bei 23 °C gemischt. Die so erhaltenen Mischungen wurden in das Rheometer überführt und kontinuierlich bei 20 °C bzw. 80 °C vermessen (1 Messpunkt alle 15 Minuten

bei 20 °C bzw. 1 Messpunkt jede Minute bei 80 °C).

Tabelle 4 Ergebnisse der durchgeführten Versuche zur Viskosität der erfindungsgemäßen Zusammensetzung bei 20 °C und bei 80 °C.

| Bsp. | Menge Isocyanatkomponente | Menge Zelec | Menge Polyol | Katalysator | Temperatur |
|---|---|---|---|---|---|
| 7 (Vergleich) | 80 g Desmodur® I<br>20 g Desmodur® N3200 | 3,74 g | 74,5 g | Ohne | 20 °C |
| 8 (Vergleich) | 80 g Desmodur® I<br>20 g Desmodur® N3200 | 3,74 g | 74,5 g | 0,049 g DBTL | 20 °C |
| 9 (erf.) | 80 g Desmodur® I<br>20 g Desmodur® N3200 | 3,74 g | 74,5 g | 0,039 g Kat. 6 | 20 °C |
| 10 (Vergleich) | 80 g Desmodur® I<br>20 g Desmodur® N3200 | 3,74 g | 74,5 g | Ohne | 80 °C |
| 11 (Vergleich) | 80 g Desmodur® I<br>20 g Desmodur® N3200 | 3,74 g | 74,5 g | 0,049 g DBTL | 80 °C |
| 12 (erf.) | 80 g Desmodur® I<br>20 g Desmodur® N3200 | 3,74 g | 74,5 g | 0,039 g Kat. 6 | 80 °C |

Die in Graph 1 dargestellten Viskositätsmessungen bei 20 °C zeigen, dass DBTL auch bei dieser niedrigen Temperatur zu einer beschleunigten Reaktion gegenüber der unkatalysierten Reaktion führt, da die Viskosität der Probe mit DBTL stärker zunimmt als die Viskosität der Probe ohne Katalysator.

Der Einsatz des erfindungsgemäßen Katalysators 6 führt bei 20 °C zu einem langsameren Anstieg der Viskosität im Vergleich zu dem unkatalysierten System. Das heißt, das die erfindungsgemäßen Zusammensetzung sogar gegenüber dem unkatalysierten System eine verlängerte Topfzeit aufweist. Dies ist besonders vorteilhaft, da sich dadurch die Verarbeitungszeit der erfindungsgemäßen Zusammensetzung verlängert.

Nicht nur die verlängerte Topfzeit bei 20 °C sondern auch die aus Graph 2 ersichtliche, erhöhte katalytische Aktivität des erfindungsgemäßen Katalysators bei 80 °C gegenüber dem unkatalysierten System ist ein weiterer Vorteil der erfindungsgemäßen Zusammensetzung.

**Herstellung eines Brillenglasrohlings**

Zuerst wurde die Gießform montiert, indem zwei Glasformschalen (85mm Durchmesser, Innenradius 88 mm, Shamir Insight, Inc., IL) mit einem Kunststoff Dichtring zusammengeklemmt wurden, so daß eine Gießkavität entstand.

Das Gießsystem bestand aus einer Mischung 1: 80 g Desmodur® I, 20 g Desmodur® N 3200 und 3,76 g Zelec® UN, das gemischt und über Nacht stehengelassen wurde.

Mischung 2 wurden aus 73,9 g Desmophen® 4011 T und 0,04 g Katalysator 6: (4,12-Dibutyl-2,6,10,14-tetramethyl-1,7,9,15-tetraoxa-4,12-diaza-8-stannaspirol[7.7]pentadecan) zusammengemischt und ebenfalls über Nacht stehengelassen.

Danach wurde die Mischung 1 in einem Kolben überführt und für 30 Minuten bei 10 mbar evakuiert. Mischung 2 wurde dann in den Kolben dazugegeben, und die finale Mischung 3 wurde für 30 Minuten bei 10 mbar gerührt und entgast. Mischung 3 wurde dann durch ein 5 $\mu$m Filter filtriert und in eine Spritze gefüllt und daraufhin wurde die Gießform vollständig gefüllt.

Die gefüllte Gießform wurde im Trockenschrank mit folgenden Temperaturprofil gehärtet: 4 Stunden bei 20 °C; in einer Zeit von 13 Stunden auf 100 °C linear aufgeheizt; 2 Stunden bei 100 °C getempert; 2 Stunden bei 120 °C getempert. Schließlich wurde die Gießform auf Raumtemperatur abgekühlt und nach vollständigem Abkühlen wurden zunächst die Manschette und dann die zwei Glaskörper manuell entfernt.

Auf diese Weise wurde ein völlig klarer, transparenter und schlierenfreier Brillenglasrohling erhalten. Die Transmission betrug bei der Normlichtart D65 93 %. Der Brechungsindex $n^D$ betrug 1,50 bei 23 °C.

## Patentansprüche

**1.** Zusammensetzung enthaltend eine

Isocyanatkomponente A), umfassend wenigstens ein cycloaliphatisches oder araliphatisches Diisocyanat, eine Polyolkomponente B), umfassend wenigstens ein Polyol mit einer OH-Zahl von 80 bis 1000 mg KOH/g, eine Additivkomponente C), umfassend wenigstens ein internes Entformungsmittel, wobei es sich bei dem Entformungsmittel um wenigstens ein Mono- und/oder Dialkylphosphat handelt, das 8 bis 12 Kohlenstoffatome, im Alkylrest aufweist, und eine
Katalysatorkomponente D), umfassend wenigstens eine anorganische Metallkomplexverbindung als thermolatenter Katalysator,

**dadurch gekennzeichnet, dass** der thermolatente Katalysator einen Quotient der Reaktionsgeschwindigkeiten zwischen katalysierter Reaktion und unkatalysierter Reaktion bei 30 °C von ≤ 5,0 und bei 60 °C von ≥ 1,1 aufweist, wobei der besagte Quotient in einer unter einer trockenen Stickstoffatmosphäre durchgeführten Modellreaktion zwischen einem auf Hexamethylendiisocyanat basierenden Isocyanurat und 2-Ethylhexanol bestimmt wird,

in dem Isocyanatgruppen und Hydroxylgruppen ein äquimolares Verhältnis aufweisen;
die Katalysatorkonzentration zwischen 160 und 200 µmol Metallatom pro kg Polyisocyanat beträgt;
und die Konzentration der Isocyanatgruppen zum Zeitpunkt des Mischens und nach 2 Stunden bei 30 °C gemäß DIN 53 185 bestimmt wird.

**2.** Zusammensetzung gemäß Anspruch 1, **dadurch gekennzeichnet, dass** die anorganische Metallkomplexverbindung Bismuth, Titan, Zink, Zirkonium oder Zinn, bevorzugt Bismuth oder Zinn und besonders bevorzugt Zinn als Zentralatom umfasst.

**3.** Zusammensetzung gemäß einem der Ansprüche 1 oder 2, **dadurch gekennzeichnet, dass** die anorganische Metallkomplexverbindung wenigstens einen Liganden aufweist, der wenigstens eine Ether-, Thioether- oder Aminogruppe aufweist und/oder ein Chelatligand ist, bevorzugt wenigstens eine Aminogruppe aufweist und/oder ein Chelatligand ist und besonders bevorzugt wenigstens eine Aminogruppe aufweist und ein Chelatligand ist.

**4.** Zusammensetzung gemäß einem der Ansprüche 1 bis 3, **dadurch gekennzeichnet, dass** die anorganische Metallkomplexverbindung aus der Gruppe der Formeln I, II oder III ausgewählt wird:

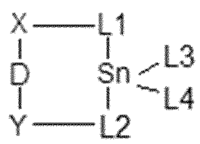

(I),

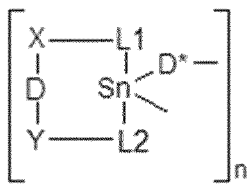

(II),

mit n > 1,

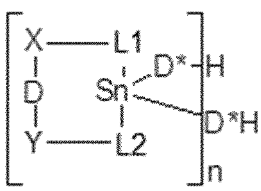

(III),

mit n > 1, wobei gilt:

D steht für -O-, -S- oder -N(R1)-,

wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest

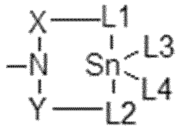

steht,
oder R1 und L3 zusammen für -Z-L5- stehen;

D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(RS)- oder -C(R2)(R3)-C(R4)(R5)-C(R6)(R7)- oder ortho-Arylenresten der Formeln

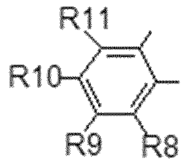

oder

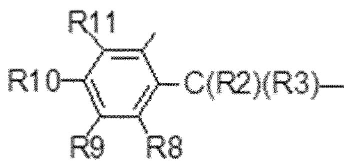

,

wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, - OC(=S)-, -SC(=O)-, -SC(=S)-, $-OS(=O)_2O-$, $-OS(=O)_2-$ oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, - OC(=O)R14, -SR15, -OC(=S)R16, $-OS(=O)_2OR17$, $-OS(=O)_2R18$ oder -NR19R20, oder
L3 und L4 zusammen stehen für -L1-X-D-Y-L2-,
wobei für R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen,
bevorzugt steht D für -N(R1)-, wobei R1 Wasserstoff oder ein Alkyl-, Aralkyl-, Alkaryl- oder Arylrest mit bis zu 20 C-Atomen ist oder der Rest

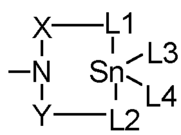

ist und besonders bevorzugt steht D für -N(R1)-, wobei R1 Wasserstoff oder ein Methyl-, Ethyl-, Propyl-, Butyl-, Hexyl-, Octyl-, Ph-, oder $CH_3Ph$-Rest oder der Rest

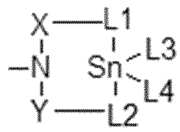

ist und wobei Propyl-, Butyl-, Hexyl-, und Octyl für alle isomeren Propyl-, Butyl-, Hexyl- sowie Octylreste stehen.

5. Zusammensetzung gemäß einem der Ansprüche 1 bis 4, **dadurch gekennzeichnet, dass** das interne Entformungsmittel wenigstens eine Verbindung umfasst, die einen $pK_S$-Wert von ≤ 4,60 aufweist..

6. Zusammensetzung gemäß einem der Ansprüche 1 bis 5, **dadurch gekennzeichnet, dass** die Isocyanatkomponente A) ein Gemisch aus a) wenigstens einem cycloaliphatischen oder araliphatischen Diisocyanat und b) wenigstens einem acyclischen, aliphatischen Di- oder Triisocyanat oder einem Oligomer eines aliphatischen Diisocyanats, bevorzugt ein Gemisch aus a) wenigstens einem cycloaliphatischen Diisocyanat oder araliphatischen Diisocyanat und b) wenigstens einem Oligomer eines aliphatischen Diisocyanats, umfasst.

7. Zusammensetzung gemäß Anspruch 6, **dadurch gekennzeichnet, dass** das Gemisch in der Isocyanatkomponente A) in einem Gewichtsverhältnis von a) zu b) zwischen 55:45 und 94:6, bevorzugt zwischen 60:40 und 90:10 und besonders bevorzugt zwischen 70:30 und 85:15 vorliegt.

8. Zusammensetzung gemäß einem der Ansprüche 6 oder 7, **dadurch gekennzeichnet, dass** das Oligomer eines aliphatischen Diisocyanats wenigstens eine Allophanat-, eine Biuret-, eine Uretdion-, eine Isocyanurat- und/oder eine Urethangruppe, bevorzugt wenigstens eine Allophanat-, eine Biuret- und/oder eine Urethangruppe und besonders bevorzugt wenigstens eine Allophanat- und/oder eine Biuretgruppe aufweist.

9. Zusammensetzung gemäß Anspruch 8, **dadurch gekennzeichnet, dass** das aliphatische Diisocyanat ein linear aliphatisches Diisocyanat, bevorzugt 1,6-Hexamethylendiisocyanat, ist.

10. Zusammensetzung gemäß einem der Ansprüche 1 bis 9, **dadurch gekennzeichnet, dass** die Isocyanatkomponente A) wenigstens 3,5,5-Trimethyl-1-isocyanato-3-isocyanatomethylcyclohexan, 4,4'-Methylenbis(cyclohexylisocyanat), 1,3-Bis(isocyanatomethyl)benzol, 1,4-Bis(isocyanatomethyl)benzol, 2,5-Bis(isocyanatomethyl)-bicyclo[2.2.1]heptan, 2,6-Bis(isocyanatomethyl)-bicyclo[2.2.1]heptan, 1,3-Diisocyanato-2-Methylcyclohexan und/oder 1,3-Diisocyanato-6-Methylcyclohexan, bevorzugt wenigstens 3,5,5-Trimethyl-1-isocyanato-3-isocyanatomethylcyclohexan und/oder 4,4'-Methyl-biscyclohexylisocyanat und besonders bevorzugt 3,5,5-Trimethyl-1-isocyanato-3-isocyanatomethylcyclohexan umfasst.

11. Zusammensetzung gemäß einem der Ansprüche 1 bis 10, **dadurch gekennzeichnet, dass** die Polyolkomponente B) wenigstens ein Polyetherpolyol oder ein Polyesterpolyol, bevorzugt wenigstens ein Polyetherpolyol und besonders bevorzugt ein Trimethylolpropan gestartetes Polyetherpolyol oder Mischungen eines Trimethylolpropan gestarteten Polyetherpolyols mit wenigstens einem weiteren Polyetherpolyol umfasst.

12. Zusammensetzung gemäß einem der Ansprüche 1 bis 11, **dadurch gekennzeichnet, dass** die Isocyanatgruppen der Isocyanatkomponente A) und die Hydroxylgruppen der Polyolkomponente B) in einem Verhältnis von 1,50: 1,00 bis 1,00: 1,50, bevorzugt von 1,20: 1,00 bis 1,00: 1,20 und besonders bevorzugt von 1,15: 1,00 bis 1,05: 1,00 stehen.

13. Verfahren zur Herstellung eines Elastomers, bei dem eine Zusammensetzung gemäß einem der Ansprüche 1 bis 12 gegebenenfalls unter Erwärmen gehärtet wird..

14. Elastomer, erhältlich nach dem Verfahren gemäß Anspruch 13.

15. Verwendung einer Zusammensetzung gemäß einem der Ansprüche 1 bis 12 zur Herstellung transparenter Formkörpern, die bei einer Dicke von 2 mm und der Normlichtart D65 definiert nach DIN 6173 eine Transmission von wenigstens 90 % aufweisen.

16. Verwendung gemäß Anspruch 15, **dadurch gekennzeichnet, dass** der Formkörper eine optische Linse oder ein Teil einer optischen Linse, wobei die optische Linse eine Sammellinse, eine Streulinse, eine Verscheibung, ein Scheinwerfer oder ein Brillenglas und besonders bevorzugt ein Brillenglas sein kann.

17. Transparente Formkörper die bei einer Dicke von 2 mm und der Normlichtart D65 definiert nach DIN 6173 eine Transmission von wenigstens 90 % aufweisen, enthaltend eine Zusammensetzung gemäß einem der Ansprüche 1 bis 12.

## Claims

1. Composition containing an

isocyanate component A) comprising at least one cycloaliphatic or araliphatic diisocyanate, a
polyol component B) comprising at least one polyol having an OH number of 80 to 1000 mg KOH/g, an
additive component C) comprising at least one internal demoulding agent, wherein the demoulding agent is at least one mono- and/or dialkyl phosphate having 8 to 12 carbon atoms in the alkyl radical, and a
catalyst component D) comprising at least one inorganic metal complex compound as a thermolatent catalyst,
**characterized in that** the thermolatent catalyst has a quotient of the reaction rates between catalysed reaction and uncatalysed reaction of ≤ 5.0 at 30°C and of ≥ 1.1 at 60°C, wherein said quotient is determined in a model reaction between a hexamethylene diisocyanate-based isocyanurate and 2-ethylhexanol performed in a dry nitrogen atmosphere,
in which isocyanate groups and hydroxyl groups are present in an equimolar ratio;
the catalyst concentration is between 160 and 200 μmol of metal atom per kg of polyisocyanate;
and the concentration of the isocyanate groups is determined according to DIN 53 185 at the time of mixing and after 2 hours at 30°C.

2. Composition according to Claim 1, **characterized in that** the inorganic metal complex compound comprises bismuth, titanium, zinc, zirconium or tin, preferably bismuth or tin and particularly preferably tin as the central atom.

3. Composition according to either of Claims 1 and 2, **characterized in that** the inorganic metal complex compound comprises at least one ligand which comprises at least one ether, thioether or amino group and/or is a chelate ligand, preferably comprises at least one amino group and/or is a chelate ligand and particularly preferably comprises at least one amino group and is a chelate ligand.

4. Composition according to any of Claims 1 to 3, **characterized in that** the inorganic metal complex compound is selected from the group of formulae I, II or III:

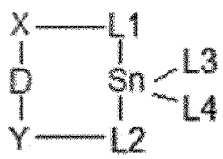
(I),

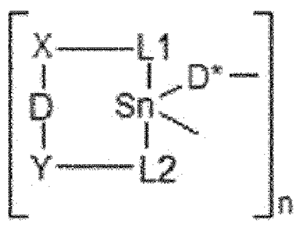
(II),

where n > 1,

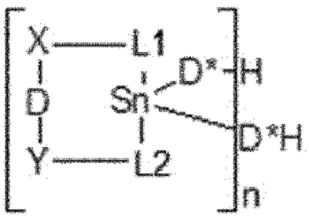

(III),

where n > 1, wherein:

D represents -O-, -S- or -N(R1)-,
where R1 represents a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur and nitrogen, or represents hydrogen or the radical

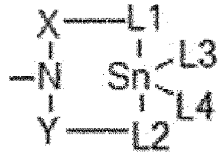

,

or R1 and L3 together represent -Z-L5-;
D* represents -O- or -S-;
X, Y and Z represent identical or different radicals selected from alkylene radicals of the formulae - C(R2)(R3)-, -C(R2) (R3)-C(R4) (R5)- or -C(R2)(R3)-C(R4)(R5)-C(R6)(R7)- or ortho-arylene radicals of formulae

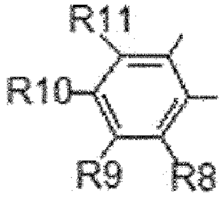

or

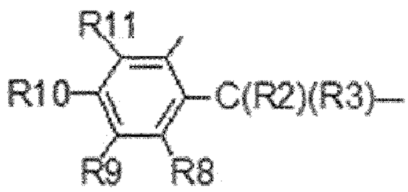

,

wherein R2 to R11 independently of one another represent saturated or unsaturated, linear or branched, aliphatic or cycloaliphatic radicals or optionally substituted aromatic or araliphatic radicals which have to 20 carbon atoms and may optionally comprise heteroatoms from the group of oxygen, sulfur and nitrogen, or represent hydrogen;
L1, L2 and L5 independently of one another represent -O-, -S-, -OC(=O)-, -OC(=S)-, -SC(=O)-, -SC(=S)-, - $OS(=O)_2O$-, -$OS(=O)_2$- or -N(R12)-,
wherein R12 represents a saturated or unsaturated, linear or branched, aliphatic or cycloaliphatic radical or an optionally substituted aromatic or araliphatic radical which has up to 20 carbon atoms and may optionally contain heteroatoms from the group of oxygen, sulfur and nitrogen, or represents hydrogen;
L3 and L4 independently of one another represent -OH, - SH, -OR13, -Hal, -OC(=O)R14, -SR15, -OC(=S)R16, - $OS(=O)_2OR17$, -$OS(=O)_2R18$ or -NR19R20, or L3 and L4 together represent -L1-X-D-Y-L2-,
wherein R13 to R20 independently of one another represent saturated or unsaturated, linear or branched, aliphatic or cycloaliphatic radicals or optionally substituted aromatic or araliphatic radicals which have up to 20 carbon atoms and may optionally comprise heteroatoms from the group of oxygen, sulfur and nitrogen, or represent hydrogen, D preferably represents -N(R1)-, wherein R1 is hydrogen or an alkyl, aralkyl, alkaryl or aryl radical having up to 20 carbon atoms or is the radical

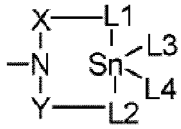

and D particularly preferably represents -N(R1)-, wherein R1 is hydrogen or a methyl, ethyl, propyl, butyl, hexyl, octyl, Ph or $CH_3Ph$ radical or the radical

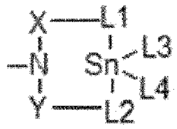

and
wherein propyl, butyl, hexyl and octyl represent all isomeric propyl, butyl, hexyl and octyl radicals.

5. Composition according to any of Claims 1 to 4, **characterized in that** the internal demoulding agent comprises at least one compound having a $pK_A$ of $\leq 4.60$.

6. Composition according to any of Claims 1 to 5, **characterized in that** the isocyanate component A) comprises a mixture of a) at least one cycloaliphatic or araliphatic diisocyanate and b) at least one acyclic, aliphatic di- or triisocyanate or an oligomer of an aliphatic diisocyanate, preferably a mixture of a) at least one cycloaliphatic diisocyanate or araliphatic diisocyanate and b) at least one oligomer of an aliphatic diisocyanate.

7. Composition according to Claim 6, **characterized in that** the mixture in the isocyanate component A) is present in a weight ratio of a) to b) between 55:45 and 94:6, preferably between 60:40 and 90:10 and particularly preferably between 70:30 and 85:15.

8. Composition according to either of Claims 6 and 7, **characterized in that** the oligomer of an aliphatic diisocyanate comprises at least one allophanate, one biuret, one uretdione, one isocyanurate and/or one urethane group, preferably at least one allophanate, one biuret and/or one urethane group and particularly preferably at least one allophanate and/or one biuret group.

9. Composition according to Claim 8, **characterized in that** the aliphatic diisocyanate is a linear aliphatic diisocyanate, preferably 1,6-hexamethylene diisocyanate.

10. Composition according to any of Claims 1 to 9, **characterized in that** the isocyanate component A) comprises at least 3,5,5-trimethyl-1-isocyanato-3-isocyanatomethylcyclohexane, 4,4'-methylenebis(cyclohexyl isocyanate), 1,3-bis(isocyanatomethyl)benzene, 1,4-bis(isocyanatomethyl)benzene, 2,5-bis(isocyanatomethyl)bicyclo[2.2.1]heptane, 2,6-bis(isocyanatomethyl)bicyclo[2.2.1]heptane, 1,3-diisocyanato-2-methylcyclohexane and/or 1,3-diisocyanato-6-methylcyclohexane, preferably at least 3,5,5-trimethyl-1-isocyanato-3-isocyanatomethylcyclohexane and/or 4,4'-methylbiscyclohexyl isocyanate and particularly preferably 3,5,5-trimethyl-1-isocyanato-3-isocyanatomethylcyclohexane.

11. Composition according to any of Claims 1 to 10, **characterized in that** the polyol component B) comprises at least one polyether polyol or one polyester polyol, preferably at least one polyether polyol and particularly preferably a trimethylolpropane-initiated polyether polyol or mixtures of a trimethylolpropane-initiated polyether polyol with at least one further polyether polyol.

12. Composition according to any of Claims 1 to 11, **characterized in that** the isocyanate groups of the isocyanate component A) and the hydroxyl groups of the polyol component B) are in a ratio of 1.50:1.00 to 1.00:1.50, preferably of 1.20:1.00 to 1.00:1.20 and particularly preferably of 1.15:1.00 to 1.05:1.00.

13. Process for producing an elastomer where a composition according to any of Claims 1 to 12 is cured, optionally with heating.

14. Elastomer obtainable by the process according to Claim 13.

15. Use of a composition according to any of Claims 1 to 12 for producing transparent moulded articles which at a thickness of 2 mm and standard light type D 65 defined according to DIN 6173 exhibit a transmittance of at least 90%.

16. Use according to Claim 15, **characterized in that** the moulded article is an optical lens or a part of an optical lens,

wherein the optical lens may be a converging lens, a diverging lens, a glazing, a headlight or an eyeglasses lens, particularly preferably an eyeglasses lens.

17. Transparent moulded articles which at a thickness of 2 mm and standard light type D 65 defined according to DIN 6173 exhibit a transmittance of at least 90% and contain a composition according to any of Claims 1 to 12.

## Revendications

1. Composition contenant un

composant isocyanate A), comprenant au moins un diisocyanate cycloaliphatique ou araliphatique, un composant polyol B), comprenant au moins un polyol présentant un indice d'OH de 80 à 1000 mg de KOH/g, un composant additif C), comprenant au moins un agent de démoulage interne, l'agent de démoulage étant au moins un phosphate de monoalkyle et/ou de dialkyle, qui présente 8 à 12 atomes de carbone dans le radical alkyle et un

composant catalytique D), comprenant au moins un composé complexe métallique inorganique en tant que catalyseur thermolatent,

**caractérisée en ce que** le catalyseur thermolatent présente un quotient des vitesses de réaction entre une réaction catalysée et une réaction non catalysée à 30°C ≤ 5,0 et à 60°C ≥ 1,1, ledit quotient étant déterminé dans une réaction modèle réalisée sous une atmosphère sèche d'azote entre un isocyanurate à base de diisocyanate d'hexaméthylène et du 2-éthylhexanol,

les groupes isocyanate et les groupes hydroxyle présentant un rapport équimolaire ;

la concentration en catalyseur étant située entre 160 et 200 pmoles d'atomes métalliques par kg de polyisocyanate ;

et la concentration en groupes isocyanate au moment du mélange et après 2 heures à 30°C étant déterminée selon la norme DIN 53 185.

2. Composition selon la revendication 1, **caractérisée en ce que** le composé complexe métallique inorganique comprend du bismuth, du titane, du zinc, du zirconium ou de l'étain, de préférence du bismuth ou de l'étain et de manière particulièrement préférée de l'étain en tant qu'atome central.

3. Composition selon l'une des revendications 1 ou 2, **caractérisée en ce que** le composé complexe métallique inorganique présente au moins un ligand, qui présente au moins un groupe éther, thioéther ou amino et/ou qui est un ligand chélaté, de préférence qui présente au moins un groupe amino et/ou qui est un ligand chélaté et de manière particulièrement préférée qui présente au moins un groupe amino et qui est un ligand chélaté.

4. Composition selon l'une des revendications 1 à 3, **caractérisée en ce que** le composé complexe métallique inorganique est choisi dans le groupe des formules I, II ou III :

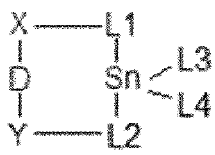

(I),

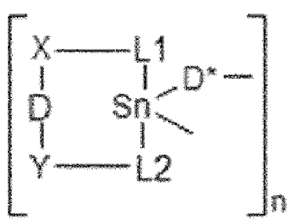

(II),

avec n > 1,

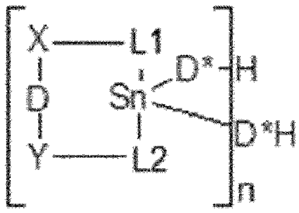

(III),

avec n > 1, où :

D représente -O-, -S- ou -N(R1)-, R1 représentant un radical aliphatique ou cycloaliphatique saturé ou insaturé, linéaire ou ramifié, ou un radical aromatique ou araliphatique le cas échéant substitué, comprenant jusqu'à 20 atomes de carbone, qui peut le cas échéant contenir des hétéroatomes de la série oxygène, soufre, azote, ou représentant hydrogène ou le radical

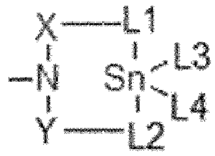

,

ou R1 et L3 représentant conjointement -Z-L5- ; D* représente -O- ou -S- ; X, Y et Z représentent des radicaux identiques ou différents choisis parmi les radicaux alkylène des formules -C(R2) (R3)-, -C(R2)(R3)-C(R4) (R5)- ou - C(R2) (R3)-C(R4) (R5)-C(R6) (R7)- ou des radicaux ortho-arylène des formules

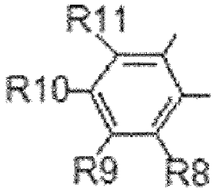

ou

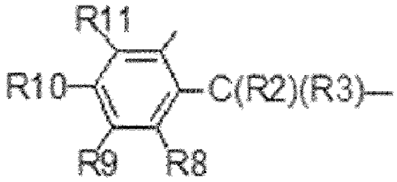

,

R2 à R11 représentant, indépendamment les uns des autres, des radicaux aliphatiques ou cycloaliphatiques, saturés ou insaturés, linéaires ou ramifiés ou des radicaux aromatiques ou araliphatiques le cas échéant substitués, comprenant jusqu'à 20 atomes de carbone, qui peuvent le cas échéant contenir des hétéroatomes de la série oxygène, soufre, azote, ou représentant hydrogène ; L1, L2 et L5 représentent indépendamment les uns des autres -O-, -S-, -OC(=O)-, -OC(=S)-, -SC(=O)-, -SC(=S)-, $-OS(=O)_2O-$, $-OS(=O)_2-$ ou -N(R12)-, R12 représentant un radical aliphatique ou cycloaliphatique, saturé ou insaturé, linéaire ou ramifié ou un radical aromatique ou araliphatique le cas échéant substitué, comprenant jusqu'à 20 atomes de carbone, qui peut le cas échéant contenir des hétéroatomes de la série oxygène, soufre, azote, ou représentant hydrogène ; L3 et L4 représentent, indépendamment l'un de l'autre, - OH, -SH, -OR13, -Hal, -OC(=O)R14, -SR15, -OC(=S)R16, - $OS(=O)_2OR17$, $-OS(=O)_2R18$ ou -NR19R20, ou L3 et L4 représentent ensemble -L1-X-D-Y-L2-, R13 à R20 représentant, indépendamment les uns des autres, des radicaux saturés ou insaturés, linéaires ou ramifiés, aliphatiques ou cycloaliphatiques ou des radicaux aromatiques ou araliphatiques, le cas échéant substitués comprenant jusqu'à 20 atomes de carbone, qui peuvent le cas échéant contenir des hétéroatomes de la série oxygène, soufre, azote ou représentent hydrogène, de préférence, D représente -N(R1)-, R1 représentant hydrogène ou un radical alkyle, aralkyle, alkaryle ou aryle comprenant jusqu'à 20 atomes de carbone ou représentant le radical

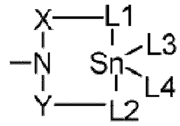

et de manière particulièrement préférée D représente -N(R1)-, R1 représentant hydrogène ou un radical méthyle, éthyle, propyle, butyle, hexyle, octyle, Ph ou $CH_3Ph$ ou représentant le radical

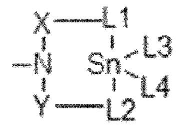

et propyle, butyle, hexyle et octyle représentant tous les radicaux propyle, butyle, hexyle et octyle isomères.

5. Composition selon l'une des revendications 1 à 4, **caractérisée en ce que** l'agent de démoulage interne comprend au moins un composé qui présente une valeur $pK_a \leq 4,60$.

6. Composition selon l'une des revendications 1 à 5, **caractérisée en ce que** le composant isocyanate A) est un mélange de a) au moins un diisocyanate cycloaliphatique ou araliphatique et de b) au moins un diisocyanate ou triisocyanate acyclique, aliphatique ou un oligomère d'un diisocyanate aliphatique, de préférence un mélange de a) au moins un diisocyanate cycloaliphatique ou araliphatique et de b) au moins un oligomère d'un diisocyanate aliphatique.

7. Composition selon la revendication 6, **caractérisée en ce que** le mélange dans le composant isocyanate A) se trouve dans un rapport en poids de a) à b) entre 55:45 et 94:6, de préférence entre 60:40 et 90:10 et de manière particulièrement préférée entre 70:30 et 85:15.

8. Composition selon l'une des revendications 6 ou 7, **caractérisée en ce que** l'oligomère d'un diisocyanate aliphatique présente au moins un groupe allophanate, biuret, uretdione, isocyanurate et/ou uréthane, de préférence au moins un groupe allophanate, biuret et/ou uréthane et de manière particulièrement préférée au moins un groupe allophanate et/ou biuret.

9. Composition selon la revendication 8, **caractérisée en ce que** le diisocyanate aliphatique est un diisocyanate aliphatique linéaire, de préférence le diisocyanate de 1,6-hexaméthylène.

10. Composition selon l'une des revendications 1 à 9, **caractérisée en ce que** le composant isocyanate A) comprend au moins du 3,5,5-triméthyl-1-isocyanato-3-isocyanatométhylcyclohexane, du 4,4'-méthylènebis(cyclohexylisocyanate), du 1,3-bis(isocyanatométhyl)benzène, du 1,4-bis(isocyanatométhyl)benzène, du 2,5-bis(isocyanatométhyl)-bicyclo[2.2.1]heptane, du 2,6-bis(isocyanatométhyl)-bicyclo[2.2.1]heptane, du 1,3-diisocyanato-2-méthylcyclohexane et/ou du 1,3-diisocyanato-6-méthylcyclohexane, de préférence au moins du 3,5,5-triméthyl-1-isocyanato-3-isocyanatométhylcyclohexane et/ou du 4,4'-méthyl-biscyclohexylisocyanate et de manière particulièrement préférée du 3,5,5-triméthyl-1-isocyanato-3-isocyanatométhylcyclohexane.

11. Composition selon l'une des revendications 1 à 10, **caractérisée en ce que** le composant polyol B) comprend au moins un polyétherpolyol ou un polyesterpolyol, de préférence au moins un polyétherpolyol et de manière particulièrement préférée un polyétherpolyol initié par le triméthylolpropane ou des mélanges d'un polyétherpolyol initié par le triméthylolpropane avec au moins un autre polyétherpolyol.

12. Composition selon l'une des revendications 1 à 11, **caractérisée en ce que** les groupes isocyanate du composant isocyanate A) et les groupes hydroxyle du composant polyol B) se trouvent dans un rapport de 1,50:1,00 à 1,00:1,50, de préférence de 1,20:1,00 à 1,00:1,20 et de manière particulièrement préférée de 1,15:1,00 à 1,05:1,00.

13. Procédé pour la préparation d'un élastomère, dans lequel une composition selon l'une des revendications 1 à 12 est durcie, le cas échéant en chauffant.

**14.** Élastomère, pouvant être obtenu selon le procédé selon la revendication 13.

**15.** Utilisation d'une composition selon l'une des revendications 1 à 12 pour la fabrication de corps moulés transparents, qui présentent, à une épaisseur de 2 mm et avec un type de lumière normale D65 définie selon la norme DIN 6173, une transmission d'au moins 90%.

**16.** Utilisation selon la revendication 15, **caractérisée en ce que** le corps moulé peut être une lentille optique ou une partie d'une lentille optique, la lentille optique pouvant être une lentille convergente, une lentille divergente, un vitrage, un projecteur ou un verre de lunette et de manière particulièrement préférée un verre de lunette.

**17.** Corps moulés transparents qui présentent, à une épaisseur de 2 mm et un type de lumière normale D65 définie selon la norme DIN 6173, une transmission d'au moins 90%, contenant une composition selon l'une des revendications 1 à 12.

Graph 1: Beispiel 7-9, Viskositätsmessung bei 20 °C

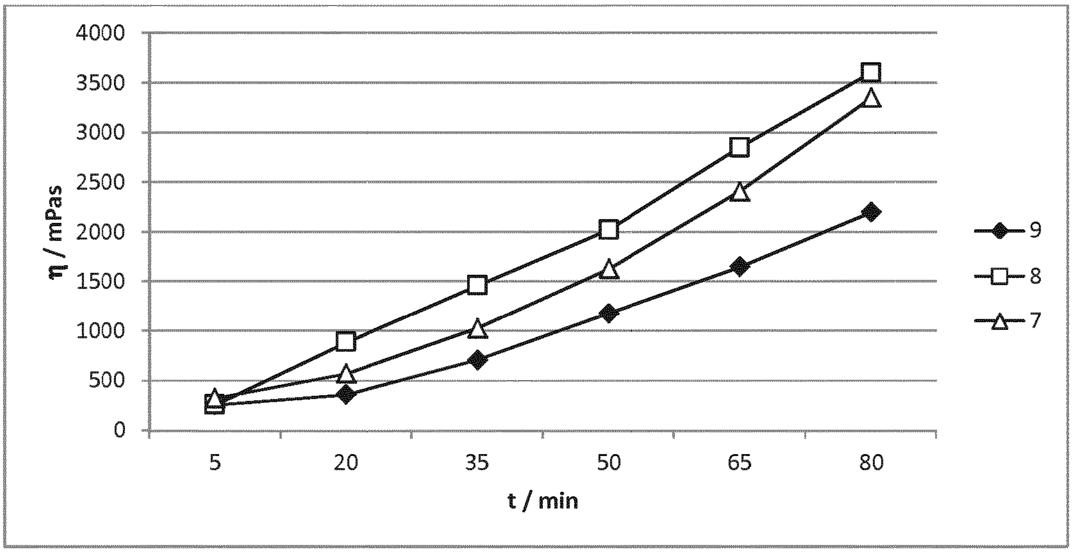


Graph 2: Beispiel 10-12, Viskositätsmessung bei 80 °C

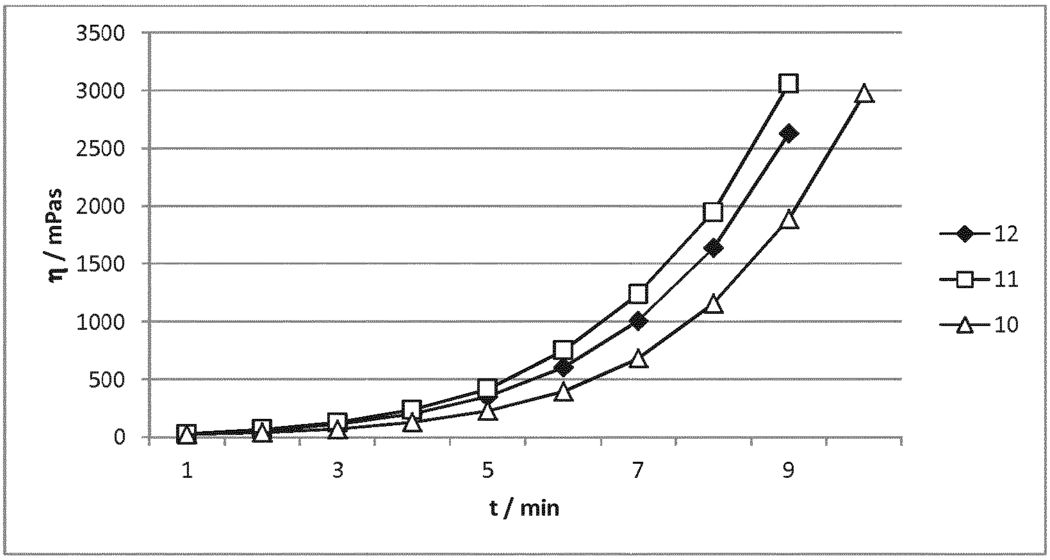

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011051247 A1
- WO 2008092597 A2
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 2622951 A
- EP 0978523 A


### In der Beschreibung aufgeführte Nicht-Patentliteratur


- *J. Organomet. Chem.,* 2009, vol. 694, 3184-3189
- *Chem. Heterocycl. Comp.,* 2007, vol. 43, 813-834
- *Indian J. Chem.,* 1967, vol. 5, 643-645
- *J. Prakt. Chem.,* 1994, vol. 336, 185-200
- Ullmanns Encyclopädie der Technischen Chemie. Verlag Chemie Weinheim, 1980, vol. 19, 61
- **VON H. WAGNER ; H.F. SARX.** Lackkunstharze. Carl Hanser Verlag, 1971, 86-152
- Chem. Heterocycl. Comp. 2007, vol. 43, 813-834
- **FA. KEVER ; RATINGEN, DE.** Technologie. Alfa Aesar GmbH & Co KG